(19) Europäisches Patentamt / European Patent Office / Office européen des brevets

(11) **EP 3 589 048 B1**

(12) **EUROPEAN PATENT SPECIFICATION**

(45) Date of publication and mention of the grant of the patent:
**28.07.2021  Bulletin 2021/30**

(21) Application number: **18770493.7**

(22) Date of filing: **21.03.2018**

(51) Int Cl.:
*H04W 72/04* (2009.01)

(86) International application number:
**PCT/CN2018/079874**

(87) International publication number:
**WO 2018/171635 (27.09.2018 Gazette 2018/39)**

(54) **DATA SENDING METHOD AND APPARATUS, AND DATA RECEIVING METHOD AND APPARATUS**

DATENSENDEVERFAHREN UND -VORRICHTUNG SOWIE DATENEMPFANGSVERFAHREN UND -VORRICHTUNG

PROCÉDÉ ET APPAREIL D'ENVOI DE DONNÉES, ET PROCÉDÉ ET APPAREIL DE RÉCEPTION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017  CN 201710184294**

(43) Date of publication of application:
**01.01.2020  Bulletin 2020/01**

(73) Proprietor: **Huawei Technologies Co., Ltd.**
**Longgang District**
**Shenzhen, Guangdong 518129 (CN)**

(72) Inventors:
• **LYU, Yongxia**
  **Shenzhen**
  **Guangdong 518129 (CN)**
• **MA, Ruixiang**
  **Shenzhen**
  **Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2010/052620    WO-A1-2015/154524**

WO-A1-2016/019552    WO-A1-2017/039374
US-A1- 2015 271 818

• HUAWEI ET AL: "The retransmission and HARQ schemes for grant-free", 3GPP DRAFT; R1-1608859, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051148913, Retrieved from the Internet: URL:http://www.3gpp.org/ftp/Meetings_3GPP_ SYNC/RAN1/Docs/ [retrieved on 2016-10-09]
• HTC: "HARQ retransmission in grant-free NOMA", 3GPP TSG RAN WG1 NR Ad-Hoc Meeting, R1-1701009, 20 January 2017 (2017-01-20), XP051203299,
• HUAWEI: "Support of URLLC in UL", 3GPP TSG RAN WG1 NR Ad Hoc Meeting, R1-1700024, 20 January 2017 (2017-01-20), XP051207566,
• ZTE: "Basic Grant-free Transmission for URLLC", 3GPP TSG RAN WG1 Meeting #88, R1-1701594, 17 February 2017 (2017-02-17), XP051208761,
• LENOVO: "HARQ design for UL grant-free URLLC transmission", 3GPP TSG RAN WG1 Meeting #88, R1-1702667, 17 February 2017 (2017-02-17), XP051209814,
• NOKIA: "UL grant-free transmission for URLLC", 3GPP TSG-RAN WG1#88, R1-1703329, 17 February 2017 (2017-02-17), XP051210459,

## Description

### TECHNICAL FIELD

This application relates to the field of wireless communications, and in particular, to a data sending method and apparatus and a data receiving method and apparatus.

### BACKGROUND

Frequency hopping is a communications mode in which an interference immunity capability of a communications system can be improved. When communications devices communicate with each other in a frequency hopping manner, a carrier frequency jumps according to a specific sequence. For example, a transmit end generates a baseband signal after modulating information bits, performs carrier modulation so that a carrier frequency changes under control of a frequency hopping sequence, and then sends the baseband signal to a receive end through an antenna. The receive end determines a receive frequency based on a frequency hopping synchronization signal and the frequency hopping sequence, and receives and demodulates a corresponding frequency hopping signal.

A requirement for supporting an ultra-reliable and low latency communications (ultra reliable and low latency communication, URLLC) service is proposed in a 5th generation (5th-Generation, 5G) communications system. In a URLLC scenario, a radio air interface transmission latency within 1 ms and transmission reliability of 99.999% are usually required. However, in an existing frequency hopping technology, the requirement of the 5G communications system on data transmission reliability cannot be met.

WO 2016/019552 A1 discloses a data transmission method. The method comprises: a first device determines frequency hopping parameters and the number of times of retransmitting to-be-transmitted data; the first device determines a first start position of the to-be-transmitted data according to the number of times of retransmitting the to-be-transmitted data and the frequency hopping parameters; and the first device sends the to-be-transmitted data to the second device according to the first start position and the bandwidth of the to-be-transmitted data.

US 2015/271818 A1 discloses devices for transmissions and retransmissions of D2D communications. A D2D message may be transmitted during an initial communications period, followed by one or more retransmissions. A device may transmit an initial transmission, determine a time hopping pattern for the retransmission(s), and determine a transmission resource for the retransmission(s) based at least in part on a resource of the initial transmission and the time hopping pattern.

WO 2015/154524 A1 discloses a D2D communication method comprising: dividing SA resources and/or data resources for D2D communication into M resource groups, each resource group comprising X resource units consisting of N time domain resource units and K frequency domain resource units, each resource unit comprising O symbols in the time domain and P subcarriers in the frequency domain, X resource units in each resource group being used to configure T logical channels, and each logical channel comprising Num resource units according to the number of transmissions Num, and determining the position of each logical channel in the resource group according to a predetermined rule; and conducting D2D communication according to the determined resource allocation.

### SUMMARY

The invention is defined in the independent claims. Embodiments representing particular realisations of the invention are defined in the dependent claims.

This application provides a data sending method and apparatus and a data receiving method and apparatus, to improve frequency hopping transmission reliability.

According to an aspect, a data sending method is provided. The method includes: determining, by a transmit end, a first resource based on a first parameter n and a second parameter j, wherein j is used to identify the transmit end, where n represents a quantity of transmissions of a first information block, the first resource is used for a current transmission of the first information block, and n is greater than 0; and transmitting, by the transmit end, first data by using the first resource, where the first data is data that is obtained by processing the first information block and that is used for the current transmission, where the first resource is included in K preconfigured resources, and K is an integer greater than 1.

According to the data sending method provided in this application, the transmit end determines the first resource from a plurality of resources based on a correspondence between a transmissions order of to-be-sent data and a resource, and sends the to-be-sent data to a receive end by using the first resource. The receive end detects the data on the first resource, determines the transmission order of the received data based on the foregoing correspondence, and when the data received by the receive end is data that is not transmitted in the first transmission, may merge and decode the currently received data and previously received data, thereby improving data transmission reliability.

Optionally, the K preconfigured resources have different resource start positions.

Optionally, the K preconfigured resources are grant-free resources.

According to the data sending method provided in this application, a resource used for grant-free transmission is different from a resource used for grant-based transmission. Therefore, a conflict that occurs when different devices send data in the two transmission modes can be avoided.

Optionally, the first resource is a resource that is in the K resources and that uniquely corresponds to n.

Therefore, the receive end can determine, based on the first resource used to receive the first data, a transmission order that is of the first information block and at which the first data is transmitted.

Optionally, the quantity of transmissions of the first information block is in a one-to-one correspondence with at least one of the K resources.

Therefore, the receive end can determine the quantity of transmissions of the first information block based on the first resource used to receive the first data.

Optionally, the determining, by a transmit end, a first resource based on a first parameter n includes: determining, by the transmit end, the first resource based on n, the second parameter j and at least one of the following parameters:

a reference position, a first time unit $t_1$, where
the reference position is used to indicate a resource used in the first transmission of the first information block, the first time unit $t_1$ is a time unit used by the transmit end to transmit the first data.

Therefore, the transmit end can flexibly select a frequency hopping communications mode based on an actual case.

Optionally, the reference position is information preset in the transmit end.

For example, the reference position may be specified in a communications protocol. Therefore, the transmit end can determine the reference position without exchanging information with the receive end, thereby reducing a data transmission latency.

Optionally, the determining, by a transmit end, a first resource based on a first parameter n includes: determining, by the transmit end, the first resource based on n and a randomization function; or determining, by the transmit end, the first resource based on n and a predefined rule; or determining, by the transmit end, the first resource based on n, a randomization function, and a predefined rule.

Therefore, the transmit end can flexibly select a frequency hopping communications mode based on an actual case.

Optionally, the method further includes: determining, by the transmit end, an initialization function of the randomization function based on higher layer signaling or identification information of the transmit end.

Therefore, a conflict between different frequency hopping users in a same cell can be avoided.

Optionally, the method further includes: determining, by the transmit end, a redundancy version set of the first data based on K, where a quantity M of redundancy versions included in the redundancy version set is less than or equal to K, and M is a positive integer.

The transmit end may determine the quantity of redundancy versions in the redundancy version set of the first data based on K, to flexibly determine the redundancy version set, so that the quantity of redundancy versions is less than or equal to a quantity of available resources. The receive end detects each piece of received data by using only one redundancy version, thereby reducing complexity of blind detection at the receive end.

Optionally, any redundancy version of the first data corresponds to at least one transmission of the first information block.

The transmit end can determine the redundancy version set without the K resources, thereby reducing complexity of sending data by the transmit end.

Optionally, K is equal to 1.

According to another aspect, a data receiving method is provided. The method includes: receiving, by a receive end, first data by using a first resource; and determining, by the receive end, a first parameter n based on the first resource and a second parameter j, wherein and j is used to identify a transmit end which sends the first data, where n represents a quantity of transmissions of a first information block, the first information block is obtained by processing the first data, and n is greater than 0, where the first resource is included in K preconfigured resources, and K is an integer greater than 1.

According to the data receiving method provided in this application, the receive end determines a transmission order of currently received data based on a correspondence between a resource used to receive data and a transmission order, and when the data received by the receive end is data that is not transmitted in the first transmission, may merge and decode the received data and previously received data, thereby improving data transmission reliability.

Optionally, the K preconfigured resources have different resource start positions.

Optionally, the K preconfigured resources are grant-free resources.

According to the data sending method provided in this application, a resource used for grant-free transmission is different from a resource used for grant-based transmission. Therefore, a conflict that occurs when different devices send data in the two transmission modes can be avoided.

Optionally, the first resource is a resource that is in the K resources and that uniquely corresponds to n.

Therefore, the receive end can determine, based on the first resource used to receive the first data, a transmission order that is of the first information block and at which the first data is transmitted.

Optionally, the quantity of transmissions of the first information block is in a one-to-one correspondence with at least one of the K resources.

Therefore, the receive end can determine the quantity of transmissions of the first information block based on the first resource used to receive the first data.

Optionally, the determining, by the receive end, a first parameter n based on the first resource includes: determining, by the receive end, n based on the first resource, the second parameter j and at least one of the following parameters:

a reference position, a first time unit $t_1$, where
the reference position is used to indicate a resource used in the first transmission of the first information block, the first time unit $t_1$ is a time unit used by the transmit end to send the first data, and j is used to identify the transmit end.

The receive end determines a correspondence between the first resource and the quantity of transmissions based on the foregoing parameter, and therefore can flexibly select a frequency hopping communications mode based on an actual case.

Optionally, the determining, by the receive end, a first parameter n based on the first resource includes: determining, by the receive end, n based on the first resource and a randomization function; or determining, by the receive end, n based on the first resource and a predefined rule; or determining, by the receive end, n based on the first resource, a randomization function, and a predefined rule.

Therefore, the transmit end and the receive end can flexibly select a frequency hopping communications mode based on an actual case.

Optionally, the method further includes: determining, by the receive end, an initialization function of the randomization function based on higher layer signaling or identification information of the transmit end.

Therefore, a conflict between different frequency hopping users in a same cell can be avoided.

Optionally, the method further includes: determining, by the receive end, a redundancy version set of the first data based on K, where a quantity M of redundancy versions included in the redundancy version set is less than or equal to K, and M is a positive integer.

The receive end may determine the quantity of redundancy versions in the redundancy version set of the first data based on K, to flexibly determine the redundancy version set, so that the quantity of redundancy versions is less than or equal to a quantity of available resources. The receive end detects each piece of received data by using only one redundancy version, thereby reducing complexity of blind detection at the receive end.

Optionally, any redundancy version of the first data corresponds to at least one transmission of the first information block.

The receive end can determine the redundancy version set without the quantity of available resources, thereby reducing complexity of sending data by the transmit end.

Optionally, K is equal to 1.

According to still another aspect, this application provides a data sending apparatus. The apparatus may implement the functions performed by the transmit end in the methods in the foregoing aspects. The functions may be implemented by hardware, or may be implemented by hardware by executing corresponding software. The hardware or software includes one or more units or modules corresponding to the foregoing functions.

In a possible design, a structure of the apparatus includes a processor and a transceiver. The processor is configured to support the apparatus in performing the corresponding functions in the foregoing methods. The transceiver is configured to support the apparatus in communicating with another network element. The apparatus may further include a memory. The memory is configured to be coupled to the processor, and the memory stores a program instruction and data that are necessary for the apparatus.

According to still another aspect, this application provides a data receiving apparatus. The apparatus may implement the functions performed by the receive end in the methods in the foregoing aspects. The functions may be implemented by hardware, or may be implemented by hardware by executing corresponding software. The hardware or software includes one or more units or modules corresponding to the foregoing functions.

In a possible design, a structure of the apparatus includes a processor and a transceiver. The processor is configured to support the apparatus in performing the corresponding functions in the foregoing methods. The transceiver is configured to support the apparatus in communicating with another network element. The apparatus may further include a memory. The memory is configured to be coupled to the processor, and the memory stores a program instruction and data that are necessary for the apparatus.

According to still another aspect, a network system is provided. The network system includes the data sending apparatus and the data receiving apparatus in the foregoing aspects.

According to still another aspect, a computer program product is provided. The computer program product includes computer program code. When the computer program code is run by a communications unit and a processing unit or a transceiver and a processor of a transmit end, a terminal device is enabled to perform the methods in the foregoing implementations.

According to still another aspect, a computer program product is provided. The computer program product includes computer program code. When the computer program code is run by a communications unit and a processing unit or a transceiver and a processor of a receive end, an access network device is enabled to perform the methods in the foregoing implementations.

According to still another aspect, this application provides a computer storage medium, configured to store a computer software instruction used by the foregoing transmit end. The computer storage medium includes a program designed for performing the foregoing aspects.

According to still another aspect, this application provides a computer storage medium, configured to store a computer software instruction used by the foregoing receive end. The computer storage medium includes a program designed for performing the foregoing aspects.

## BRIEF DESCRIPTION OF DRAWINGS

FIG. 1 is a schematic architectural diagram of a communications system applicable to this application;
FIG. 2 is a schematic flowchart of a data sending method according to this application;
FIG. 3 is a schematic flowchart of a data receiving method according to this application;
FIG. 4 is a possible schematic structural diagram of a transmit end according to this application;
FIG. 5 is another possible schematic structural diagram of a transmit end according to this application;
FIG. 6 is a possible schematic structural diagram of a receive end according to this application; and
FIG. 7 is another possible schematic structural diagram of a receive end according to this application.

## DESCRIPTION OF EMBODIMENTS

Technical solutions of this application are described below with reference to the accompanying drawings.

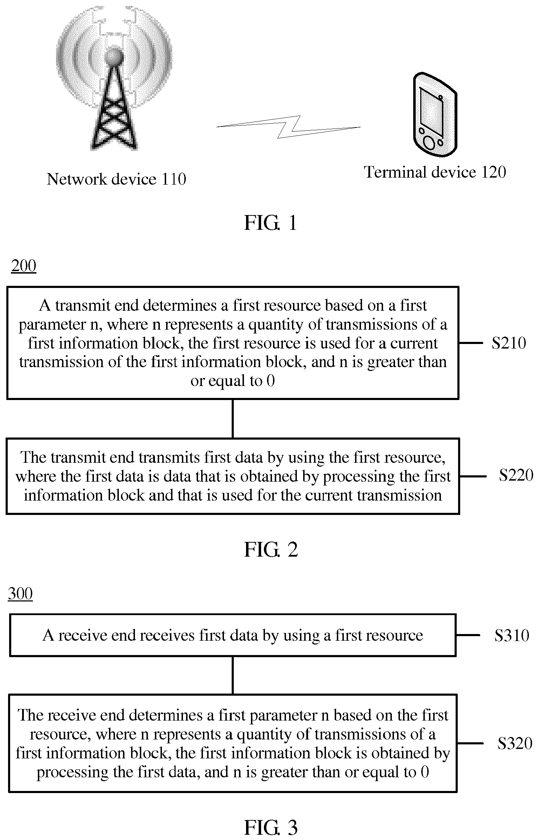

FIG. 1 shows a communications system 100 applicable to this application. The communications system 100 includes a network device 110 and a terminal device 120. The network device 110 communicates with the terminal device 120 through a wireless network. When the terminal device 120 sends data, a wireless communications module may encode information for transmission. Specifically, the wireless communications module may obtain a specific quantity of data bits to be sent to the network device 110 through a channel. For example, these data bits are data bits generated by a processing module, received from another device, or stored in a storage module. These data bits may be included in one or more transport blocks (which may also be referred to as information blocks or data blocks), and the transport block may be segmented to generate a plurality of code blocks.

In this application, a terminal device may be referred to as an access terminal, user equipment (user equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a handheld device or a computing device with a wireless communication function or another processing device connected to a wireless modem, a vehicle-mounted device, a wearable device, or user equipment in a 5G communications system.

A network device may be a base transceiver station (base transceiver station, BTS) in a code division multiple access (code division multiple access, CDMA) system, may be a NodeB (node B, NB) in a wideband code division multiple access (wideband code division multiple access, WCDMA) system, may be an evolved NodeB (evolutional node B, eNB) in a long term evolution (long term evolution, LTE) system, or may be a gNB (gNB) in a 5G communications system. The foregoing base stations are merely examples for description. Alternatively, the network device may be a relay station, an access point, a vehicle-mounted device, a wearable device, or another type of device.

The foregoing communications system applicable to this application is merely an example for description. A communications system applicable to this application is not limited thereto. For example, the communications system may alternatively include other quantities of network devices and terminal devices.

For ease of understanding this application, concepts that may be used in this application are described below in detail.

Grant-free transmission may be understood as any one or more of the following meanings, a combination of some technical features in a plurality of meanings, or another similar meaning.

The grant-free transmission may mean that a network device pre-allocates a plurality of transmission resources, and notifies a terminal device of the plurality of transmission resources; when needing to transmit uplink data, the terminal device selects at least one transmission resource from the plurality of transmission resources pre-allocated by the network device, and sends the uplink data by using the selected transmission resource; and the network device detects, on one or more transmission resources in the plurality of pre-allocated transmission resources, the uplink data sent by the terminal device. The detection may be blind detection, may be detection performed based on a control field in the uplink data, or may be detection performed in another manner.

The grant-free transmission may mean that a network device pre-allocates a plurality of transmission resources, and notifies a terminal device of the plurality of transmission resources, so that when needing to transmit uplink data, the terminal device selects at least one transmission resource from the plurality of transmission resources pre-allocated by the network device, and sends the uplink data by using the selected transmission resource.

The grant-free transmission may mean that information about a plurality of pre-allocated transmission resources is obtained; and when uplink data needs to be transmitted, at least one transmission resource is selected from the plurality of transmission resources, and the uplink data is sent by using the selected transmission resource. The information may be obtained from a network device.

The grant-free transmission may be a method in which uplink data of a terminal device can be transmitted without dynamic scheduling by a network device. The dynamic scheduling may be a scheduling manner in which the network device indicates a transmission resource for each uplink data transmission of the terminal device by using signaling. Optionally, transmitting uplink data of a terminal device may be understood as allowing uplink data of two or more terminal devices to be transmitted on a same time-frequency resource. Optionally, the transmission resource may be a transmission resource of one or more transmission time units after a moment at which the terminal device receives the signaling. The transmission time unit may be a minimum time unit for one transmission, for example, a transmission time interval (transmission time interval, TTI).

The grant-free transmission may mean that a terminal device transmits uplink data without scheduling by a network device. The scheduling may mean that the terminal device sends an uplink scheduling request to the network device, and the network device sends an uplink grant to the terminal device after receiving the scheduling request. The uplink grant indicates an uplink transmission resource allocated to the terminal device.

The grant-free transmission may be a contention-based transmission manner, and specifically may mean that a plurality of terminals simultaneously transmit uplink data on a same pre-allocated time-frequency resource without scheduling by a base station.

The data may be service data or signaling data.

The blind detection may be understood as detection performed, when whether data arrives is unknown, on data that may arrive. Alternatively, the blind detection may be understood as detection performed without an explicit signaling indication.

In this application, a basic time unit for the grant-free transmission may be a TTI (for example, a short transmission time interval (short transmission time interval, sTTI)). After an sTTI technology is introduced, in the grant-free transmission, receiving may be performed on a downlink data channel whose TTI length is 1 millisecond (ms) or less than 1 ms, or sending may be performed on an uplink data channel whose TTI length is 1 millisecond (ms) or less than 1 ms.

In this application, a time-frequency resource used by a network device and a terminal device to transmit information may be a time-frequency resource used in a contention-based mechanism, or may be a time-frequency resource used in a non-contention-based mechanism. For a time-frequency resource used in the contention-based mechanism, the terminal device may detect whether a time-frequency resource is currently in an idle state or whether the time-frequency resource is used by another device. If the time-frequency resource is in the idle state or the time-frequency resource is not used by another device, the terminal device may communicate by using the time-frequency resource, for example, perform uplink transmission. If the time-frequency resource is not in the idle state or the time-frequency resource is used by another device, the terminal device cannot use the time-frequency resource. It should be noted that in this application, a specific method and a process of the contention-based mechanism may be similar to those in the prior art. To avoid repetition, detailed description thereof is omitted herein.

In this application, a time-frequency resource used in the communications system 100 (or a time-frequency resource used by a network device and a terminal device in a contention-based mechanism) may be a grant-based time-frequency resource, or may be a grant-free time-frequency resource. This is not limited in this application. In this application, each communications device (for example, the network device or the terminal device) in the communications system 100 may communicate by using a time-frequency resource based on a grant-free transmission solution, or may communicate by using a time-frequency resource in a grant-based manner. This is not limited in this application.

In this application, a resource used by a network device and a terminal device to transmit information may be divided into a plurality of time units in time domain. In addition, the plurality of time units may be continuous, or a preset interval may be set between some adjacent time units. This is not limited in this application.

In this application, a length of a time unit may be randomly set. This is not limited in this application.

For example, one time unit may include one or more subframes; or
one time unit may include one or more slots (slot) or mini-slots (mini-slot); or
one time unit may include one or more time-domain symbols; or
one time unit may include one or more TTIs or sTTIs; or
a length of one time unit is 1 ms; or
a length of one time unit is less than 1 ms.

A TTI is a time parameter commonly used in an existing communications system, and is a time unit for scheduling data in the communications system. In an LTE system, a time length of one TTI is 1 ms, and corresponds to a time length of one subframe, namely, a time length of two slots.

In this application, data transmission may be based on scheduling by a network device. A basic time unit for scheduling includes one or more minimum time units for scheduling. The minimum time unit for scheduling may be the foregoing TTI, or may be the foregoing sTTI. A specific scheduling procedure is that a base station sends a control channel, for example, a physical downlink control channel (physical downlink control channel, PDCCH), an enhanced physical downlink control channel (enhanced physical downlink control channel, EPDCCH), or a physical downlink control channel used to schedule an sTTI for transmission (sTTI physical downlink control channel, sPDCCH). The control channel may carry scheduling information that is in different downlink control information (downlink control information, DCI) formats and that is used to schedule a physical downlink shared channel (physical downlink shared channel, PDSCH) or a physical uplink shared channel (physical uplink shared channel, PUSCH). The scheduling information includes control information such as resource allocation information and a modulation and coding scheme. A terminal device detects the control channel, and performs receiving on a downlink data channel or sending on an uplink data channel based on scheduling information carried on the detected control channel.

In this application, a spectrum resource used in the communications system 100 is not limited, and may be a licensed spectrum, an unlicensed spectrum, or another shared spectrum.

The concepts that may be used in this application are described above in detail. A data transmission method and apparatus provided in this application are described below in detail with reference to the accompanying drawings.

FIG. 2 is a schematic flowchart of a data sending method according to this application. The method 200 includes the following steps.

S210. A transmit end determines a first resource based on a first parameter n, where n represents a quantity of transmissions of a first information block, the first resource is used for a current transmission of the first information block, and n is greater than or equal to 0.

S220. The transmit end transmits first data by using the first resource, where the first data is data that is obtained by processing the first information block and that is used for the current transmission.

The first resource is included in K preconfigured resources, and K is an integer greater than 1.

In the method 200, the transmit end may be the terminal device shown in FIG. 1, may be the network device shown in FIG. 1, or may be another device, for example, a terminal device in a machine-to-machine (Machine to Machine, M2M) communications system.

In this application, the first information block is any information block to be sent by the transmit end. The first information block may be generated by the transmit end, may be obtained by the transmit end from another device, or may be stored by the transmit end. This is not limited in this application. The first data is currently to-be-transmitted data generated by processing (for example, performing coding and modulation and rate matching) the first information block. When sending the first information block, the transmit end may process the entire first information block to generate the first data, or may process a part of the first information block to generate the first data. In addition, the first parameter n may indicate that the current transmission is the $n^{th}$ transmission, or the first parameter n may indicate a current quantity of transmissions of the first information block.

In this application, the current transmission is the current $n^{th}$ transmission (a value range of n does not include 0) or the current $(n+1)^{th}$ transmission (a value range of n includes 0) of the first information block. For example, when the value range of n does not include 0, in other words, when n is greater than or equal to 1, and when n indicates that the current quantity of transmissions of the first information block is 1, the first resource is used for the first transmission of the first information block. Alternatively, when the value range of n includes 0, in other words, when n is greater than or equal to 0, and when n indicates that the quantity of transmissions of the first information block is 1, the first resource is used for the second transmission of the first information block.

It should be understood that in this application, "when", "if", and "if" all mean that a device performs corresponding processing in an objective case, are not intended to limit time, do not require the determining action during implementation by the device, and do not mean another limitation.

In S210, at least one of the K resources is in a one-to-one correspondence with at least one transmission of the first information block. For example, the first resource is used only for the current transmission of the first information block. Therefore, a receive end can determine a sequence number of at least one transmission of the first data based on a resource used to receive the first data. The first resource may include one resource, or may include a plurality of resources.

In this application, the K preconfigured resources may be frequency domain resources, time-frequency resources, or code domain resources. Preconfiguration may mean stipulation in a protocol, or configuration performed by an access network device by using signaling.

When the K resources are frequency domain resources, a correspondence between a transmission order of the first information block and at least one of the K frequency domain resources includes the following three cases:
Case 1: The quantity of data transmissions is in a one-to-one correspondence with a frequency domain resource in the K frequency domain resources.

For example, the K frequency domain resources include a first frequency domain resource and a second frequency domain resource. When n is equal to 1, the first data may be mapped to the first frequency domain resource. When n is equal to 2, the first data may be mapped to the second frequency domain resource. Therefore, the receive end may determine a transmission order of the first data based on a serial number or an index of a frequency domain resource used to receive the first data, and then may merge and decode the first data and previously received data. In this way, a data transmission success rate is increased, and a data transmission latency is reduced.

Case 2: There is a one-to-many correspondence between the quantity of data transmissions and a plurality of frequency domain resources in the K frequency domain resources.

For example, the K frequency domain resources include a first frequency domain resource, a second frequency domain resource, a third frequency domain resource, and a fourth frequency domain resource. When n is equal to 1, the first data may be mapped to the first frequency domain resource, or may be mapped to the second frequency domain resource. When n is equal to 2, the first data may be mapped to the third frequency domain resource, or may be mapped to the fourth frequency domain resource. Therefore, the transmit end can send data by selecting a frequency domain resource with relatively high reliability based on an actual case. In this way, a data transmission success rate is increased, and a data transmission latency is reduced.

Case 3: The quantity of data transmissions is in a many-to-one correspondence with any one of the K frequency domain resources.

For example, the K frequency domain resources include a first frequency domain resource and a second frequency domain resource. When n is equal to 1 or 2, the first data may be mapped to the first frequency domain resource. When n is equal to 3 or 4, the first data may be mapped to the second frequency domain resource. Therefore, the transmit end can send data in a frequency hopping manner by fully utilizing an existing frequency domain resource.

In case 3, the receive end cannot identify a specific transmission order corresponding to the first frequency domain resource, and the receive end may merge data according to a principle of a smaller value of n. For example, when the receive end detects data on the first frequency domain resource, the receive end always performs decoding by using the data as data transmitted in the first transmission, to avoid a data merging error.

The foregoing cases are merely examples for description. Actually, a correspondence between a data sending order and the K resources may be a set of a plurality of the foregoing cases.

For example, the transmit end and the receive end agree on that the first resource is used for the first transmission of the first information block, a second resource or a third resource is used for the second transmission of the first information block, and a fourth resource is used for a plurality of subsequent retransmissions. If receiving the first data by using the first resource, the receive end determines that the first data is data transmitted in the first transmission. If receiving the first data by using the second resource or the third resource, the receive end determines that the first data is data transmitted in the second transmission. If receiving the first data by using the fourth resource, the receive end may determine, according to the foregoing principle of a smaller value of n, that the first data is data transmitted in the third transmission.

The foregoing correspondence may be a correspondence agreed on in a communications protocol, and the transmit end and the receive end may perform frequency hopping communication without exchanging information. Alternatively, the foregoing correspondence may be a correspondence indicated by the transmit end to the receive end by using indication information. For example, a network device indicates the foregoing correspondence to a terminal device by using signaling or system information. Therefore, the transmit end and the receive end can flexibly perform frequency hopping communication (different frequency domain resources or code domain resources are used for different quantities of transmissions), to increase a data receiving diversity gain.

In this application, when a maximum quantity N of transmissions of the first information block is less than or equal to K, n ranges from 1 to N. When N is greater than or equal to K, n ranges from 1 to K, where N is a positive integer. The foregoing embodiment is merely an example for description, and this application is not limited thereto. Alternatively, n may range from 0. For example, when n=0, S210 should be understood as that the terminal device determines, based on a fact that the quantity of transmissions of the first information block is 0, to transmit the first data by using a frequency domain resource corresponding to the first transmission. When n=1, S210 should be understood as that the terminal device determines, based on a fact that the quantity of transmissions of the first information block is 1, to transmit the first data by using a frequency domain resource corresponding to the second transmission.

In addition, in this application, the K frequency domain resources may not overlap at all, or may partially overlap, but start positions of the K frequency domain resources are different from each other.

In this application, a method for determining, by the transmit end, the first frequency domain resource from the K frequency domain resources based on the quantity n of transmissions is not limited. For example, the transmit end may determine a start position of the first frequency domain resource based on n, and determine the first frequency domain resource based on a bandwidth. Alternatively, the transmit end may directly determine the first frequency domain resource, or determine the first frequency domain resource in another manner.

When the K resources are code domain resources, a correspondence between a data sending order and the K code domain resources is similar to the correspondence between the data sending order and the K frequency domain resources.

For example, there may be a one-to-one correspondence, a one-to-many relationship, or a many-to-one relationship between the data sending order and at least one of the K code domain resources. The code domain resource may be a pilot sequence used to transmit the first data. The K code domain resources are pseudo-orthogonal or orthogonal to each other.

When the K resources are time-frequency resources, a correspondence between a data sending order and the K resources is related to time and a frequency. The correspondence between the data sending order and the K time-frequency resources is similar to the correspondence between the data sending order and the K frequency domain resources. For details, refer to embodiments corresponding to the following methods 400 and 600.

In conclusion, according to the data sending method provided in this application, the transmit end determines the first resource from a plurality of resources based on a correspondence between a sending order of to-be-sent data and a resource, and sends the to-be-sent data to the receive end by using the first resource. The receive end detects the data on the first resource, determines a transmission order of the received data based on the foregoing correspondence, and when the data received by the receive end is data that is not transmitted in the first transmission, may merge and decode the currently received data and previously received data, thereby improving data transmission reliability.

Optionally, the K preconfigured resources have different resource start positions.

Optionally, the K preconfigured resources are grant-free resources.

According to the data sending method provided in this application, a resource used for grant-free transmission is different from a resource used for grant-based (grant-based) transmission. Therefore, a conflict that occurs when different devices send data in the two transmission modes can be avoided.

Optionally, the first resource is a resource that is in the K resources and that uniquely corresponds to n.

Therefore, the receive end can determine, based on the first resource used to receive the first data, a transmission order that is of the first information block and at which the first data is transmitted.

Optionally, the quantity of transmissions of the first information block is in a one-to-one correspondence with at least one of the K resources.

Therefore, the receive end can determine the quantity of transmissions of the first information block based on the first resource used to receive the first data.

Optionally, that a transmit end determines a first resource based on a first parameter n includes the following step:

S211. The transmit end determines the first resource based on n and at least one of the following parameters: a reference position, a first time unit $t_1$, and a second parameter j.

The reference position is used to indicate a resource used in the first transmission of the first information block, the first time unit $t_1$ is a time unit used by the transmit end to transmit the first data, and j is used to identify the transmit end.

For example, the first resource is a frequency domain resource. A frequency domain reference position is used by the transmit end to determine a first frequency domain resource. The frequency domain reference position may be a start position of a frequency domain resource used when the first data is sent for the first time, or may be a frequency domain position irrelevant to a quantity of transmissions. For example, $t_1$ may be a symbol sequence number, a slot sequence number, a mini-slot sequence number, or a subframe sequence number of the first time unit. A specific form of the first time unit is not limited in this application. The parameter j is used to identify the transmit end. For example, the parameter j may be a subscriber identity or a parameter configured in higher layer signaling.

Therefore, the transmit end can flexibly select a frequency hopping communications mode based on an actual case.

Optionally, the reference position is information preset in the transmit end.

For example, the reference position may be specified in a communications protocol. Therefore, the transmit end can determine the reference position without exchanging information with the receive end, thereby reducing a data transmission latency.

Optionally, that a transmit end determines a first resource based on a first parameter n includes one of the following steps:

> S212. The transmit end determines the first resource based on n and a randomization function.
> S213. The transmit end determines the first resource based on n and a predefined rule.
> S214. The transmit end determines the first resource based on n, a randomization function, and a predefined rule.

Therefore, the transmit end can flexibly select a frequency hopping communications mode based on an actual case.

Optionally, the method 200 further includes the following step:
S230. The transmit end determines an initialization function of the randomization function based on higher layer signaling or identification information of the transmit end.

In an optional example, when the transmit end is a base station, the base station may determine the initialization function of the randomization function based on an identifier of the terminal device. This avoids a case in which frequency hopping patterns of frequency hopping users in a same cell are consistent, and can further avoid a conflict between different frequency hopping users in the same cell.

In another optional example, when the transmit end is a terminal device, the terminal device may determine the initialization function of the randomization function based on an identifier of the terminal device or high layer signaling. This avoids a case in which frequency hopping patterns of frequency hopping users in a same cell are consistent, and can further avoid a conflict between different frequency hopping users in the same cell.

Optionally, the method 200 further includes the following step:
S240. The transmit end determines a redundancy version set of the first data based on K, where a quantity M of redundancy versions included in the redundancy version set is less than or equal to K, and M is a positive integer.

The transmit end may determine the quantity of redundancy versions in the redundancy version set of the first data based on a quantity (namely, K) of available resources, to flexibly determine the redundancy version set, so that the quantity of redundancy versions is less than or equal to the quantity of available resources. The receive end detects each piece of received data by using only one redundancy version, thereby reducing complexity of blind detection at the receive end.

Optionally, any redundancy version of the first data corresponds to at least one transmission of the first information block.

Alternatively, the transmit end may directly determine the redundancy version set of the first data. For example, the redundancy version set may be determined by the transmit end according to a communications protocol. When the quantity M of redundancy versions in the redundancy version set is less than the quantity K of frequency hopping frequency domain resources, one redundancy version may correspond to one or more transmissions. When M is equal to K, the redundancy version is in a one-to-one correspondence with the quantity of transmissions. When M is greater than K, one or more redundancy versions correspond to one transmission.

Therefore, the transmit end can determine the redundancy version set without the quantity of available resources, thereby reducing complexity of sending data by the transmit end.

Optionally, in the method 200, K=1.

When K=1, the transmit end has only one available resource, and uses the same resource for all transmissions. The transmit end may directly determine the first resource based on n, that is, use the same resource for all the transmissions. When K=1, formulas in a method 300 to a method 600 are applicable.

This application is further described in detail below based on the common aspect of this application that is described above.

Method 300: The terminal device determines a start position of the first frequency domain resource according to f=g(n)+g_init, and then determines the first frequency domain resource, where f is the start position of the first frequency domain resource, g(n) is a function related to the quantity n of transmissions of the first information block, g_init is the frequency domain reference position, and g_init may be a user-specific nonnegative integer, may be a nonnegative integer configured in higher layer signaling, or may be a variable related to at least one parameter of time, a subscriber identity, or higher layer signaling.

g(n) may be defined by using the following methods, but in this application, a definition of g(n) is not limited thereto.

Definition 310: g(n)=n*m, where
m is a frequency hopping unit step, and m may be determined based on the quantity K of frequency hopping frequency domain resources and the maximum quantity N of transmissions of the first data. For example, $m=\text{floor}(\frac{K}{N})$, where floor represents a rounding down operation.

Definition 320: g(n)=Pattern(n), where Pattern is a predefined table of a correspondence between a quantity of transmissions and a frequency hopping offset, as shown in Table 1.

Table 1

| Quantity of transmissions | 1 | 2 | 3 | 4 |
|---|---|---|---|---|
| Frequency hopping offset | 0 | m | 2m | 3m |

In Table 1, m may be the frequency hopping step in definition 310, or may be another value.

Definition 330: g(n)=RandomFunction(n), where RandomFunction represents a random function. For RandomFunction, a random sequence, namely, a Gold sequence with a length of 31, in an LTE system may be directly used, or another random sequence may be used. For an initialization function Cinit of the random function, any one of the following parameters may be used: a cell identifier, a UE identifier, a virtual UE identifier, or a parameter configured in higher layer signaling, and the virtual UE identifier may also be configured in the higher layer signaling.

Definition 331:

$$g(n)=(g(n-1)+\sum_{K=n*N+1}^{n*N+N-1}C(K)*2^{K-(n*N+1)})*m \bmod K$$

In definition 331, the transmit end determines g(n) based on a random accumulated frequency hopping step, C(K) represents a random function related to K, m represents a frequency hopping unit step, and mod represents a modulo operation. In this application, meanings of m and mod in other formulas are the same as those in definition 331. For brevity, details are not described below.

Definition 332:

$$g(n)=(\sum_{K=n*N+1}^{n*N+N-1}C(K)*2^{K-(n*N+1)})*m \bmod K$$

In definition 332, the transmit end determines g(n) based on a random frequency hopping step.

Definition 333:

$$g(n)=(\sum_{K=n*N+1}^{n*N+N-1}C(K)*2^{K-(n*N+1)})*m + (m-g\_init \bmod m)*fm(n)) \bmod K$$

In definition 333, the transmit end determines g(n) based on a random frequency hopping step and mirror mapping, and fm(n)=n mod 2 or fm(n)=C(n).

Definition 340: g(n)=F(Pattern(n), RandomFunction(n)) or g(n)=(Pattern(n)+RandomFunction(n)) mod K, where F represents a rule of combining predefined mapping and a random function.

Method 400: The terminal device determines a start position of the first frequency domain resource according to f=g(n, t)+g_init, and then determines the first frequency domain resource, where f is the start position of the first frequency domain resource, t is a time parameter, for example, a time unit currently used to send data, g(n, t) is a function related to the quantity n of transmissions of the first information block and the time parameter t, g_init is the frequency domain reference position, and g_init may be a user-specific nonnegative integer, may be a nonnegative integer configured in higher layer signaling, or may be a variable related to at least one parameter of time, a subscriber identity, or higher layer signaling.

g(n, t) may be defined by using the following methods, but in this application, a definition of g(n, t) is not limited thereto.

Definition 410: g(n, t)=(n+t) mod K.

Definition 421: g(n, t)=(Pattern(n)+t) mod K, where Pattern is a predefined table of a correspondence between a quantity of transmissions and a frequency hopping offset, as shown in Table 2.

Table 2

| Quantity of transmissions | 1 | 2 | 3 | 4 |
|---|---|---|---|---|
| Frequency hopping offset | 0 | m | 2m | 3m |

In Table 2, m may be a frequency hopping unit step. For example, $m=floor(\frac{K}{N})$, where floor represents a rounding down operation. Alternatively, m may be another value.

Definition 422: g(n, t)=Pattern(n, s(t) mod K, where s(t) is a time-related function, for example, s(t)=t mod Column, and Pattern is a predefined table of a correspondence between a quantity of transmissions and a frequency hopping offset, as shown in Table 3.

Table 3

| n \ j | 1 | 2 | 3 | 4 |
|---|---|---|---|---|
| 1 | 0 | m | 2m | 3m |
| 2 | m | 2m | 3m | 0 |
| 3 | 2m | 0 | m | 2m |
| 4 | 3m | 3m | 0 | m |

In Table 3, j=s(t), and m may be a frequency hopping unit step. For example, $m=floor(\frac{K}{N})$, where floor represents a rounding down operation. Alternatively, m may be another value.

Definition 430: g(n, t)=RandomFunction(n, t), where RandomFunction represents a random function. For RandomFunction, a random sequence, namely, a Gold sequence with a length of 31, in an LTE system may be directly used, or another random sequence may be used. For an initialization function Cinit of the random function, any one of the following parameters may be used: a cell identifier, a UE identifier, a virtual UE identifier, or a parameter configured in higher layer signaling, and the virtual UE identifier may also be configured in the higher layer signaling.

Definition 431: $g(n,t)=(g(n-1,t)+\sum_{K=Q(n,t)*N*K+1}^{Q(n,t)*N*K+N*K-1} C(K)*2^{K-(n*N*K+1)}) \bmod K$, where Q(n, t)=(n-1)*N+t or Q(n, t)=(t-1)*T+n, and T is a time range. For example, in an LTE system, when t is a slot sequence number, T=20.

Definition 432: $g(n,t)=(\sum_{K=Q(n,t)*N*K+1}^{Q(n,t)*N*K+N*K-1} C(K)*2^{K-(n*N*K+1)}) \bmod K$, where Q(n, t)=(n-1)*N+t or Q(n, t)=(t-1)*T+n, and T is a time range. For example, in an LTE system, when t is a slot sequence number, T=20.

Definition 433:

$$g(n,t)=(\sum_{K=Q(n,t)*N*K+1}^{Q(n,t)*N*K+N*K-1} C(K)*2^{K-(n*N*K+1)}+(m-g\_init \bmod m)*fm(n)) \bmod K$$

In definition 433, the transmit end determines g(n, t) based on a random frequency hopping step and mirror mapping, fm(n)=n mod 2 or fm(n)=C(n), Q(n, t)=(n-1)*N+t or Q(n, t)=(t-1)*T+n, and T is a time range. For example, in an LTE system, when t is a slot sequence number, T=20.

Definition 440: g(n,t)=F(Pattern(n,t), RandomFunction(n,t)), where F represents a rule of combining predefined mapping and a random function.

Definition 441: g(n,t)=(Pattern(n), RandomFunction(t)) mod K.

Definition 442: g(n,t)=(Pattern(t), RandomFunction(n)) mod K.

Definition 443: g(n,t)=(Pattern(t,n), RandomFunction(n)) mod K.

Definition 444: g(n,t)=(Pattern(n), RandomFunction(n,t)) mod K.

Definition 445: g(n,t)=(Pattern(n,t), RandomFunction(n,t)) mod K.

Method 500: The terminal device determines a start position of the first frequency domain resource according to f=g(n, j)+g_init, and then determines the first frequency domain resource, where f is the start position of the first frequency domain resource, t is a time parameter, for example, a time unit currently used to send data, g(n, j) is a function related to the quantity n of transmissions of the first information block and the parameter j, g_init is the frequency domain reference position, and g_init may be a user-specific nonnegative integer, may be a nonnegative integer configured in higher layer signaling, or may be a variable related to at least one parameter of time, a subscriber identity, or higher layer signaling.

g(n, j) may be defined by using the following methods, but in this application, a definition of g(n, j) is not limited thereto.

Definition 510: g(n, j)=(n+j) mod K.

Definition 521: g(n, j)=(Pattern(n)+j) mod K, where Pattern is a predefined table of a correspondence between a quantity of transmissions and a frequency hopping offset, as shown in Table 4.

Table 4

| Quantity of transmissions | 1 | 2 | 3 | 4 |
|---|---|---|---|---|
| Frequency hopping offset | 0 | m | 2m | 3m |

In Table 4, m may be a frequency hopping unit step. For example, $m=\text{floor}(\frac{K}{N})$, where floor represents a rounding down operation. Alternatively, m may be another value.

Definition 522: g(n, j)-Pattern(n, s(j)) mod K, where s(j) is a function with an input of j, and may be defined as s(j)=j mod Column or $s(j)=\sum_{K=0}^{\text{Column-1}} C(K)*2^K \mod \text{Column};$ $C_{init}=h(j)$, where h(j) is a method for calculating the initialization value $C_{init}$ of the random function C, a typical calculation method is $C_{init}=j$, and Pattern is a predefined table of a correspondence between a quantity of transmissions and a frequency hopping offset, as shown in Table 5.

Table 5

| n \ w | 1 | 2 | 3 | 4 |
|---|---|---|---|---|
| 1 | 0 | m | 2m | 3m |
| 2 | m | 2m | 3m | 0 |
| 3 | 2m | 0 | m | 2m |
| 4 | 3m | 3m | 0 | m |

In Table 5, w=s(j), and m may be a frequency hopping unit step. For example, $m=\text{floor}(\frac{K}{N})$, where floor represents a rounding down operation. Alternatively, m may be another value.

Definition 530: g(n, j)=RandomFunction(n, j), where RandomFunction represents a random function. For RandomFunction, a random sequence, namely, a Gold sequence with a length of 31, in an LTE system may be directly used, or another random sequence may be used. For an initialization function Cinit of the random function, any one of the following parameters may be used: a cell identifier, a UE identifier, a virtual UE identifier, or a parameter configured in higher layer signaling, and the virtual UE identifier may also be configured in the higher layer signaling.

Definition 531:
$$g(n, j)=(g(n-1, j)+\sum_{K=Q(n,j)*N*K+1}^{Q(n,j)*N*K+N*K-1} C(K)*2^{K-(n*N*K+1)}) \bmod K$$
, where

$Q(n,j)=(n-1)*N+j$ or $Q(n, j)=(j-1)*J+n$, and J is a value range of j. In an example of an LTE system, j is a subscriber identity, and J=100, namely, a quantity of frequency hopping users that is configured in the current system, or J=2^16, namely, a maximum quantity of users supported in a cell. j may be configured by using high layer signaling, for example, J=50.

Definition 532:
$$g(n, j)=(\sum_{K=Q(n,j)*N*K+1}^{Q(n,j)*N*K+N*K-1} C(K)*2^{K-(n*N*K+1)}) \bmod K$$
, where $Q(n,j)=(n-1)*N+j$ or $Q(n, j)=(j-1)*J+n$, and J is a value range of j. In an example of an LTE system, j is a subscriber identity, and J=100, namely, a quantity of frequency hopping users that is configured in the current system, or J=2^16, namely, a maximum quantity of users supported in a cell. j may be configured by using high layer signaling, for example, J=50.

Definition 533:

$$g(n, j)=(\sum_{K=Q(n,j)*N*K+1}^{Q(n,j)*N*K+N*K-1} C(K)*2^{K-(n*N*K+1)}+(m-g\_init \bmod m)*fm(n)) \bmod K.$$

In definition 533, the transmit end determines g(n, j) based on a random frequency hopping step and mirror mapping, fm(n)=n mod 2 or fm(n)=C(n), Q(n, j)=(n-1)*N+j or Q(n, j)=(j-1)*J+n, and J is a value range of j. In an example of an LTE system, j is a subscriber identity, and J=100, namely, a quantity of frequency hopping users that is configured in the current system, or J=2^16, namely, a maximum quantity of users supported in a cell. j may be configured by using high layer signaling, for example, J=50.

Definition 540: g(n, j)=F(Pattern(n, j), RandomFunction(n, j)), where F represents a rule of combining predefined mapping and a random function.

Definition 541: g(n, j)=(Pattern(n), RandomFunction(j)) mod K.

Definition 542: g(n, j)=(Pattern(j), RandomFunction(n)) mod K.

Definition 543: g(n, j)=(Pattern(j,n), RandomFunction(n)) mod K.

Definition 544: g(n, j)=(Pattern(n), RandomFunction(n, j)) mod K.

Definition 545: g(n, j)=(Pattern(n, j), RandomFunction(n, j)) mod K.

Method 600: The terminal device determines a start position of the first frequency domain resource according to f=(g(n, j, t)+g_init) mod K, and then determines the first frequency domain resource, where f is the start position of the first frequency domain resource, t is a time parameter, for example, a time unit currently used to send data, g(n, j, t) is a function related to the quantity n of transmissions of the first information block, the parameter j, and the time parameter t, g_init is the frequency domain reference position, and g_init may be a user-specific nonnegative integer, may be a nonnegative integer configured in higher layer signaling, or may be a variable related to at least one parameter of time, a subscriber identity, or higher layer signaling.

g(n, j, t) may be defined by using the following methods, but in this application, a definition of g(n, j, t) is not limited thereto.

Definition 610: g(n, j, t)=(n+j+t) mod K.

Definition 621: g(n, j, t)=(Pattern(n)+j+t) mod K, where Pattern is a predefined table of a correspondence between a quantity of transmissions and a frequency hopping offset, as shown in Table 6.

Table 6

| Quantity of transmissions | 1 | 2 | 3 | 4 |
|---|---|---|---|---|
| Frequency hopping offset | 0 | m | 2m | 3m |

In Table 6, m may be a frequency hopping unit step. For example, $m=floor(\frac{K}{N})$, where floor represents a rounding down operation. Alternatively, m may be another value.

Definition 622: g(n, j, t)=(Pattern(n, s(j))+t) mod K, where s(j) is a function with an input of j, and may be defined as $s(j)=j$ mod Column or $s(j)=\sum_{K=0}^{Column-1}C(K)*2^K$ mod Column; $C_{init}=h(j)$, and Pattern is a predefined table of a correspondence between a quantity of transmissions and a frequency hopping offset, as shown in Table 7.

Table 7

| n \ w | 1 | 2 | 3 | 4 |
|---|---|---|---|---|
| 1 | 0 | m | 2m | 3m |
| 2 | m | 2m | 3m | 0 |
| 3 | 2m | 0 | m | 2m |
| 4 | 3m | 3m | 0 | m |

$$m=floor(\frac{K}{N})$$

In Table 7, w=s(j), and m may be a frequency hopping unit step. For example, $m=floor(\frac{K}{N})$, where floor represents a rounding down operation. Alternatively, m may be another value.

Definition 630: g(n, j, t)=RandomFunction(n, j, t), where

RandomFunction represents a random function. For RandomFunction, a random sequence, namely, a Gold sequence with a length of 31, in an LTE system may be directly used, or another random sequence may be used. For an initialization function Cinit of the random function, any one of the following parameters may be used: a cell identifier, a UE identifier, a virtual UE identifier, or a parameter configured in higher layer signaling, and the virtual UE identifier may also be configured in the higher layer signaling.

Definition 631: $g(n, t)=(g(n-1,t)+\sum_{K=Q(n, t)*N*K+1}^{Q(n, t)*N*K+N*K-1}C(K)*2^{K-(n*N*K+1)})$ mod K, where $C_{init}=h(j)$, Q(n, t)=(n-1)*N+t or Q(n, t)=(t-1)*T+n, and T is a time range. For example, in an LTE system, when t is a slot sequence number, T=20.

Definition 632: $g(n, t)=(\sum_{K=Q(n, t)*N*K+1}^{Q(n, t)*N*K+N*K-1}C(K)*2^{K-(n*N*K+1)})$ mod K, where $C_{init}=h(j)$, Q(n, t)=(n-1)*N+t or Q(n, t)=(t-1)*T+n, and T is a time range. For example, in an LTE system, when t is a slot sequence number, T=20.

Definition 633:

$$g(n, t)=(\sum_{K=Q(n, t)*N*K+1}^{Q(n, t)*N*K+N*K-1}C(K)*2^{K-(n*N*K+1)}+(m - g\_init\ mod\ m)*fm(n))\ mod\ K.$$

In definition 633, the transmit end determines g(n, t) based on a random frequency hopping step and mirror mapping, fm(n)=n mod 2 or fm(n)=C(n), Q(n, t)=(n-1)*N+t or Q(n, t)=(t-1)*T+n, and T is a time range. For example, in an LTE system, when t is a slot sequence number, T=20.

Definition 640: g(n, j, t)=F(Pattern(n, j, t), RandomFunction(n, j, t)) where

F represents a rule of combining predefined mapping and a random function. A meaning of Pattern (n, j, t) is the same as that in definition 621, and a meaning of RandomFunction (n, j, t) is the same as that in definition 631, definition 632, or definition 633.

Definition 641: g(n, j, t)=(Pattern(n, s(j))+RandomFunction(t)), where s(j)=j mod Column or

$$s(j)=(\sum\nolimits_{K=1}^{\text{Column}} C(K)*2^K) \bmod \text{Column}$$

, and an initialization function of C(K) is configured by using high layer signaling, or is determined based on the identifier of the terminal device.

Definition 642: g(n, j, t)=(Pattern1(n, s(j1))+h(t, j2), where j1 and j2 are parameters configured by using high

$$s(j1)=(\sum\nolimits_{K=1}^{\text{Column}} C(K)*2^K) \bmod \text{Column}$$

layer signaling or subscriber identities, s(j1)=j1 mod Column or , an initialization function of C(K) is configured by using high layer signaling, or is determined based on the identifier of the terminal device, and h(t, j2)=(t+j2) mod K.

Definition 643: g(n, j, t)=(y(n)+RandomFunction(t)), where y(n)=n mod K.

Definition 644: g(n, j, t)=(n+RandomFunction(t)).

Definition 645: g(n, j, t)=(Pattern(n)+RandomFunction(t)).

In all of the foregoing methods, an example in which the first resource is a frequency domain resource or the first resource is a time-frequency resource is used for description. However, this application is not limited thereto. When the first resource is a code domain resource, the foregoing formulas are also applicable.

FIG. 3 is a schematic flowchart of a data receiving method according to this application. A method 700 includes the following steps.

S710. A receive end receives first data by using a first resource.

S720. The receive end determines a first parameter n based on the first resource, where n represents a quantity of transmissions of a first information block, the first information block is obtained by processing the first data, and n is greater than or equal to 0.

The first resource is included in K preconfigured resources, and K is an integer greater than 1.

In the method 700, the receive end may be the terminal device shown in FIG. 1, may be the network device shown in FIG. 1, or may be another device, for example, a terminal device in an M2M communications system.

In S710, when receiving data for the first time, the receive end detects the data in a blind detection manner. When detecting the first data on the first resource in the blind detection manner, the receive end may determine, based on a correspondence between the first resource and an order at which a transmit end sends the data, a resource used for a next transmission of the first information block.

In an optional example, if the receive end receives second data on a second frequency domain resource before receiving the first data, the receive end may determine, based on a correspondence between the order at which the transmit end sends data and a frequency domain resource, a frequency domain resource (namely, the first frequency domain resource) used to receive data next time, so that the receive end can receive the first data without performing blind detection.

It may be clearly understood by a person skilled in the art that determining, by the receive end, the quantity of transmissions of the first information block based on the first resource is an inverse process of determining, by the transmit end, the first resource based on the quantity of transmissions of the first information block. For brevity, for a detailed working process of the receive end in the method 700, refer to the corresponding process of the transmit end in the method 200. Details are not described herein again.

Therefore, according to the data receiving method provided in this application, the receive end determines a transmission order of currently received data based on a correspondence between a resource used to receive data and a transmission order, and when the data received by the receive end is data that is not transmitted in the first transmission, may merge and decode the received data and previously received data, thereby improving data transmission reliability.

Optionally, the K preconfigured resources have different resource start positions.

Optionally, the K preconfigured resources are grant-free resources.

According to the data sending method provided in this application, a resource used for grant-free transmission is different from a resource used for grant-based transmission. Therefore, a conflict that occurs when different devices send data in the two transmission modes can be avoided.

Optionally, the first resource is a resource that is in the K resources and that uniquely corresponds to n.

Therefore, the receive end can determine, based on the first resource used to receive the first data, a transmission order that is of the first information block and at which the first data is transmitted.

Optionally, the quantity of transmissions of the first information block is in a one-to-one correspondence with at least one of the K resources.

Therefore, the receive end can determine the quantity of transmissions of the first information block based on the first resource used to receive the first data.

Optionally, that the receive end determines a first parameter n based on the first resource includes the following step:

S721. The receive end determines n based on the first resource and at least one of the following parameters:

a reference position, a first time unit $t_1$, and a parameter j.

The reference position is used to indicate a resource used in the first transmission of the first information block, the first time unit $t_1$ is a time unit used by the transmit end to send the first data, and the parameter j is used to identify the transmit end.

For example, the first resource is a frequency domain resource. A frequency domain reference position is used by the transmit end to determine a first frequency domain resource. The frequency domain reference position may be a start position of a frequency domain resource used when the first data is sent for the first time, or may be a frequency domain position irrelevant to a quantity of transmissions. For example, $t_1$ may be a symbol sequence number, a slot sequence number, a mini-slot sequence number, or a subframe sequence number of the first time unit. A specific form of the first time unit is not limited in this application. The parameter j is used to identify the transmit end. For example, the parameter j may be a subscriber identity or a parameter configured in higher layer signaling.

The receive end determines a correspondence between the first resource and the quantity of transmissions based on the foregoing parameter, and therefore can flexibly select a frequency hopping communications mode based on an actual case.

Optionally, that the receive end determines a first parameter n based on the first resource includes one of the following steps:

> S722. The receive end determines n based on the first resource and a randomization function.
> S723. The receive end determines n based on the first resource and a predefined rule.
> S724. The receive end determines n based on the first resource, a randomization function, and a predefined rule.

Therefore, the transmit end and the receive end can flexibly select a frequency hopping communications mode based on an actual case.

Optionally, the method 700 further includes the following step:

S730. The receive end determines an initialization function of the randomization function based on higher layer signaling or identification information of the transmit end.

In an optional example, when the receive end is a base station, the base station may determine the initialization function of the randomization function based on an identifier of the terminal device. This avoids a case in which frequency hopping patterns of frequency hopping users in a same cell are consistent, and can further avoid a conflict between different frequency hopping users in the same cell.

In another optional example, when the receive end is a terminal device, the terminal device may determine the initialization function of the randomization function based on an identifier of the terminal device or high layer signaling. This avoids a case in which frequency hopping patterns of frequency hopping users in a same cell are consistent, and can further avoid a conflict between different frequency hopping users in the same cell.

Optionally, the method 700 further includes the following step:

S740. The receive end determines a redundancy version set of the first data based on K, where a quantity M of redundancy versions included in the redundancy version set is less than or equal to K, and M is a positive integer.

The receive end may determine the quantity of redundancy versions in the redundancy version set of the first data based on K, to flexibly determine the redundancy version set, so that the quantity of redundancy versions is less than or equal to a quantity of available resources. The receive end detects, by using only one redundancy version, data transmitted each time, thereby reducing complexity of blind detection at the receive end.

Optionally, any redundancy version of the first data corresponds to at least one transmission.

The receive end may directly determine the redundancy version set of the first data. For example, the redundancy version set may be determined by the receive end according to a communications protocol. When the quantity M of redundancy versions in the redundancy version set is less than the quantity K of available resources, one redundancy version may correspond to one or more transmissions. When M is equal to K, the redundancy version is in a one-to-one correspondence with the quantity of transmissions. When M is greater than K, one or more redundancy versions correspond to one transmission.

Therefore, the receive end can determine the redundancy version set without the quantity of available resources, thereby reducing complexity of sending data by the transmit end.

Optionally, in the method 700, K=1.

When K=1, the receive end has only one available resource, and uses the same resource for all transmissions. When K=1, the formulas in the method 300 to the method 600 are applicable.

The examples of the data transmission method provided in this application are described above in detail. It may be understood that to implement the foregoing functions, the transmit end and the receive end include corresponding hardware structures and/or software modules for performing the functions. A person skilled in the art should easily be aware that with reference to the units and algorithm steps in the examples described in the embodiments disclosed in this specification, this application can be implemented by using hardware or a combination of hardware and computer software. Whether a function is performed by using hardware or hardware driven by computer software depends on specific applications and design constraints of the technical solutions.

In this application, the transmit end and the like may be divided into function units based on the foregoing method examples. For example, each function unit may be obtained through division based on each corresponding function, or two or more functions may be integrated into one processing unit. The foregoing integrated unit may be implemented in a form of hardware, or may be implemented in a form of a software function unit. It should be noted that in this application, unit division is an example, and is merely logical function division. In an actual implementation, another division manner may be used.

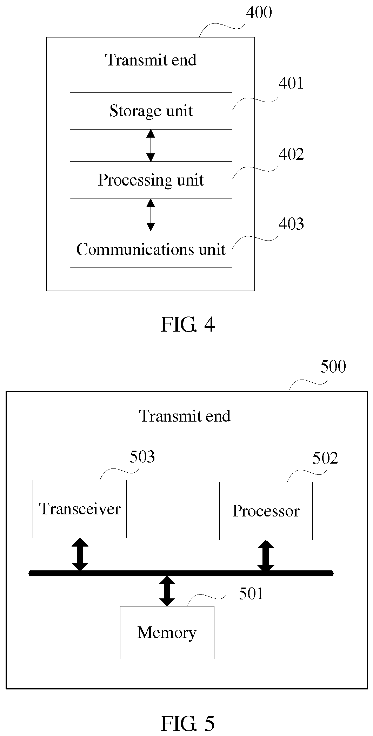

In a case of an integrated unit, FIG. 4 is a possible schematic structural diagram of a transmit end in the foregoing embodiments. A transmit end 400 includes a processing unit 402 and a communications unit 403. The processing unit 402 is configured to control and manage an action of the transmit end 400. For example, the processing unit 402 is configured to support the transmit end 400 in performing S210 in FIG. 2 and/or another process of a technology described in this specification. The communications unit 403 is configured to support the transmit end 400 in communicating with another network entity, for example, communicating with a receive end. The transmit end 400 may further include a storage unit 401, configured to store program code and data of the transmit end 400.

The processing unit 402 may be a processor or a controller, for example, may be a central processing unit (central processing unit, CPU), a general purpose processor, a digital signal processor (digital signal processing, DSP), an application-specific integrated circuit (application-specific integrated circuit, ASIC), a field programmable gate array (field programmable gate array, FPGA), another programmable logic device, a transistor logic device, a hardware component, or any combination thereof. The processing unit 402 may implement or perform various example logic blocks, modules, and circuits described with reference to content disclosed in this application. Alternatively, the processor may be a combination for implementing a computing function, for example, a combination including one or more microprocessors, or a combination of a DSP and a microprocessor. The communications unit 403 may be a transceiver, a transceiver circuit, or the like. The storage unit 401 may be a memory.

The transmit end 400 provided in this application determines a frequency hopping frequency domain resource from a plurality of frequency domain resources based on a correspondence between a sending order of to-be-sent data and a frequency domain resource, and sends the to-be-sent data to the receive end by using the frequency hopping frequency domain resource. The receive end detects the data on the frequency hopping frequency domain resource, determines a transmission order of the received data based on the foregoing correspondence, and when the data received by the receive end is data that is not transmitted in the first transmission, may merge and decode the received data and previously received data, thereby improving data transmission reliability.

When the processing unit 402 is a processor, the communications unit 403 is a transceiver, and the storage unit 401 is a memory, the transmit end in this application may be a transmit end shown in FIG. 5.

As shown in FIG. 5, the transmit end 500 includes a processor 502, a transceiver 503, and a memory 501. The transceiver 503, the processor 502, and the memory 501 may communicate with each other by using an internal connection path, to transmit a control signal and/or a data signal.

It may be clearly understood by a person skilled in the art that for the purpose of convenient and brief description, for a detailed working process of the apparatus and the unit described above, refer to the corresponding process in the foregoing method embodiments. Details are not described herein again.

The transmit end 500 provided in this application determines a frequency hopping frequency domain resource from a plurality of frequency domain resources based on a correspondence between a sending order of to-be-sent data and a frequency domain resource, and sends the to-be-sent data to a receive end by using the frequency hopping frequency domain resource. The receive end detects the data on the frequency hopping frequency domain resource, determines a transmission order of the received data based on the foregoing correspondence, and when the data received by the receive end is data that is not transmitted in the first transmission, may merge and decode the received data and previously received data, thereby improving data transmission reliability.

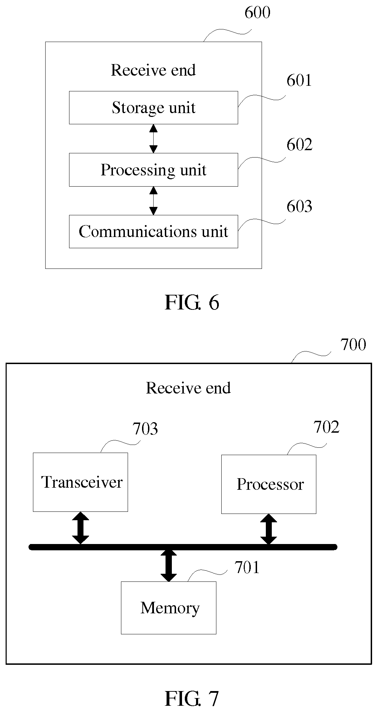

In a case of an integrated unit, FIG. 6 is a possible schematic structural diagram of a receive end in the foregoing embodiments. A receive end 600 includes a processing unit 602 and a communications unit 603. The processing unit 602 is configured to control and manage an action of the receive end 600. For example, the processing unit 602 is configured to support the receive end 600 in performing S320 in FIG. 3 and/or another process of a technology described in this specification. The communications unit 603 is configured to support the receive end 600 in communicating with another network entity, for example, communicating with a transmit end. The receive end 600 may further include a storage unit 601, configured to store program code and data of the receive end 600.

The processing unit 602 may be a processor or a controller, for example, may be a CPU, a general purpose processor, a DSP, an ASIC, an FPGA, another programmable logic device, a transistor logic device, a hardware component, or any combination thereof. The processing unit 602 may implement or perform various example logic blocks, modules, and circuits described with reference to content disclosed in this application. Alternatively, the processor may be a combination for implementing a computing function, for example, a combination including one or more microprocessors, or a combination of a DSP and a microprocessor. The communications unit 603 may be a transceiver, a transceiver circuit, or the like. The storage unit 601 may be a memory.

The receive end 600 used for data transmission provided in this application determines a transmission order of currently received data based on a correspondence between a frequency domain resource used to receive data and a transmission order, and when the data received by the receive end is data that is not transmitted in the first transmission, may merge and decode the received data and previously received data, thereby improving data transmission reliability.

When the processing unit 602 is a processor, the communications unit 603 is a transceiver, and the storage unit 601 is a memory, the receive end in this application may be a receive end shown in FIG. 7.

As shown in FIG. 7, the receive end 700 includes a processor 702, a transceiver 703, and a memory 701. The transceiver 703, the processor 702, and the memory 701 may communicate with each other by using an internal connection path, to transmit a control signal and/or a data signal.

It may be clearly understood by a person skilled in the art that for the purpose of convenient and brief description, for a detailed working process of the apparatus and the unit described above, refer to the corresponding process in the foregoing method embodiments. Details are not described herein again.

The receive end 700 used for data transmission provided in this application determines a transmission order of currently received data based on a correspondence between a frequency domain resource used to receive data and a transmission order, and when the data received by the receive end is data that is not transmitted in the first transmission, may merge and decode the received data and previously received data, thereby improving data transmission reliability.

Sequence numbers of processes do not mean execution sequences in the embodiments of this application. The execution sequences of the processes should be determined based on functions and internal logic of the processes, and should not be construed as any limitation on implementation processes of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

Method or algorithm steps described in combination with content disclosed in this application may be implemented by using hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. An example storage medium is coupled to a processor, so that the processor can read information from the storage medium, and can write information into the storage medium. Certainly, the storage medium may be a component of a processor. The processor and the storage medium may be located in an ASIC. In addition, the ASIC may be located in a terminal device. Certainly, the processor and the storage medium may exist in a transmit end and a receive end as discrete components.

All or some of the foregoing embodiments may be implemented by software, hardware, firmware, or any combination thereof. When software is used to implement the embodiments, some or all of the embodiments may be implemented in a form of a computer program product. The computer program product includes one or more computer instructions. When the computer program instructions are loaded and executed on a computer, some or all of the procedures or functions described in this application are generated. The computer may be a general purpose computer, a special-purpose computer, a computer network, or another programmable apparatus. The computer instructions may be stored in a computer readable storage medium, or may be transmitted by using the computer readable storage medium. The computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer readable storage medium may be any available medium accessible to a computer, or a data storage device, for example, a server or a data center, integrating one or more available media. The available medium may be a magnetic medium (for example, a floppy disk, a hard disk, or a magnetic tape), an optical medium (for example, a DVD), a semiconductor medium (for example, a solid state disk (solid state disk, SSD)), or the like.

The objectives, technical solutions, and beneficial effects of this application are further described in detail in the foregoing specific implementations. It should be understood that the foregoing descriptions are merely specific examples of this application, but are not intended to limit the protection scope of this application. Any modification, equivalent replacement, improvement, or the like is included only according to the scope of the invention as defined in the appended claims.

**Claims**

1. A data sending method, wherein the method comprises:

   determining (S210), by a transmit end, a first resource based on a first parameter n, wherein n represents a quantity of transmissions of a first information block, the first resource is used for a current transmission of the first information block, and n is greater than 0; and
   transmitting (S220), by the transmit end, first data by using the first resource, wherein the first data is data that is obtained by processing the first information block and that is used for the current transmission, wherein the first resource is comprised in K preconfigured resources, and K is an integer greater than or equal to 1;
   **characterized in that** the determining (S210), by a transmit end, a first resource based on a first parameter n comprises:
   determining, by the transmit end, the first resource based on n and a second parameter j, wherein j is used to identify the transmit end.

2. The method according to claim 1, wherein the K preconfigured resources have different resource start positions.

3. The method according to claim 1 or 2, wherein the quantity of transmissions of the first information block is in a one-to-one correspondence with at least one of the K resources.

4. The method according to any one of claims 1 to 3, wherein the determining (S210), by a transmit end, a first resource based on a first parameter n comprises:

   determining, by the transmit end, the first resource based on n, the second parameter j and at least one of a reference position and a first time unit $t_1$, wherein
   the reference position is used to indicate a resource used in the first transmission of the first information block, the first time unit $t_1$ is a time unit used by the transmit end to transmit the first data.

5. The method according to any one of claims 1 to 4, wherein the determining (S210), by a transmit end, a first resource based on a first parameter n comprises:

   determining, by the transmit end, the first resource based on n and a randomization function; or
   determining, by the transmit end, the first resource based on n and a predefined rule; or
   determining, by the transmit end, the first resource based on n, a randomization function, and a predefined rule.

6. The method according to any one of claims 1 to 5, wherein the method further comprises:
   determining, by the transmit end, a redundancy version set of the first data based on K, wherein a quantity M of redundancy versions comprised in the redundancy version set is less than or equal to K, and M is a positive integer.

7. The method according to any one of claims 1 to 6, wherein any redundancy version of the first data corresponds to at least one transmission of the first information block.

8. A data receiving method, wherein the method comprises:

   receiving (S310), by a receive end, first data by using a first resource; and
   determining (S320), by the receive end, a first parameter n based on the first resource, wherein n represents a quantity of transmissions of a first information block, the first information block is obtained by processing the first data, and n is greater than 0, wherein
   the first resource is comprised in K preconfigured resources, and K is an integer greater than or equal to 1;
   **characterized in that** the determining (S320), by the receive end, a first parameter n based on the first resource comprises:
   determining, by the receive end, n based on the first resource and a second parameter j, wherein and j is used to identify a transmit end which sends the first data.

9. The method according to claim 8, wherein the K preconfigured resources have different resource start positions.

10. The method according to claim 8 or 9, wherein the quantity of transmissions of the first information block is in a one-to-one correspondence with at least one of the K resources.

**11.** The method according to any one of claims 8 to 10, wherein the determining (S320), by the receive end, a first parameter n based on the first resource comprises:

determining, by the receive end, n based on the first resource, the second parameter j and at least one of a reference position and a first time unit $t_1$, wherein
the reference position is used to indicate a resource used in the first transmission of the first information block, the first time unit $t_1$ is a time unit used by the transmit end to send the first data.

**12.** The method according to any one of claims 8 to 11, wherein the method further comprises:
determining, by the receive end, a redundancy version set of the first data based on K, wherein a quantity M of redundancy versions comprised in the redundancy version set is less than or equal to K, and M is a positive integer.

**13.** The method according to any one of claims 8 to 12, wherein any redundancy version of the first data corresponds to at least one transmission of the first information block.

**14.** A data sending apparatus, wherein the apparatus comprises a processing unit (402) and a communications unit (403), wherein
the processing unit (402) is configured to determine a first resource based on a first parameter n, wherein n represents a quantity of transmissions of a first information block, the first resource is used for a current transmission of the first information block, and n is greater than 0; and
the communications unit (403) is configured to transmit first data by using the first resource determined by the processing unit, wherein the first data is data that is obtained by processing the first information block and that is used for the current transmission, wherein
the first resource is comprised in K preconfigured resources, and K is an integer greater than or equal to 1;
**characterized in that**
the processing unit (402) is specifically configured to determine the first resource based on n and and a second parameter j, wherein j is used to identify the data sending apparatus.

**15.** A data receiving apparatus, wherein the apparatus comprises a processing unit (602) and a communications unit (603), wherein
the communications unit is (603) configured to receive first data by using a first resource; and
the processing unit (602) is configured to determine a first parameter n based on the first resource used by the communications unit to receive the first data, wherein n represents a quantity of transmissions of a first information block, the first information block is obtained by processing the first data, and n is greater than 0, wherein
the first resource is comprised in K preconfigured resources, and K is an integer greater than or equal to 1;
**characterized in that** the processing unit (602) is configured to determine n based on the first resource and a second parameter j, wherein j is used to identify a transmit end which sends the first data.

**Patentansprüche**

**1.** Datensendeverfahren, wobei das Verfahren umfasst:

Bestimmen (S210), durch ein Übertragungsende, einer ersten Ressource basierend auf einem ersten Parameter n, wobei n eine Menge von Übertragungen eines ersten Informationsblocks darstellt, die erste Ressource für eine aktuelle Übertragung des ersten Informationsblocks verwendet wird und n größer als 0 ist; und
Senden (S220), durch das Übertragungsende, von ersten Daten unter Verwendung der ersten Ressource, wobei die ersten Daten Daten sind, die durch Verarbeiten des ersten Informationsblocks erhalten werden und die für die aktuelle Übertragung verwendet werden, wobei
die erste Ressource in K vorkonfigurierten Ressourcen enthalten ist und K eine ganze Zahl größer oder gleich 1 ist;
**dadurch gekennzeichnet, dass** das Bestimmen (S210), durch ein Übertragungsende, einer ersten Ressource basierend auf einem ersten Parameter n umfasst:
Bestimmen, durch das Übertragungsende, der ersten Ressource basierend auf n und einem zweiten Parameter j, wobei j verwendet wird, um das Übertragungsende zu identifizieren.

**2.** Verfahren nach Anspruch 1, wobei die K vorkonfigurierten Ressourcen unterschiedliche Ressourcenstartpositionen aufweisen.

**3.** Verfahren nach Anspruch 1 oder 2, wobei die Menge von Übertragungen des ersten Informationsblocks in einer Eins-zu-Eins-Entsprechung mit mindestens einer der K Ressourcen steht.

**4.** Verfahren nach einem der Ansprüche 1 bis 3, wobei das Bestimmen (S210), durch ein Übertragungsende, einer ersten Ressource basierend auf einem ersten Parameter n umfasst:

Bestimmen, durch das Übertragungsende, der ersten Ressource basierend auf n, dem zweiten Parameter j und mindestens einem von einer Referenzposition und einer ersten Zeiteinheit $t_1$, wobei die Referenzposition verwendet wird, um eine Ressource anzuzeigen, die bei der ersten Übertragung des ersten Informationsblocks verwendet wird, die erste Zeiteinheit $t_1$ eine Zeiteinheit ist, die von dem Übertragungsende zum Übertragen der ersten Daten verwendet wird.

**5.** Verfahren nach einem der Ansprüche 1 bis 4, wobei das Bestimmen (S210), durch ein Übertragungsende, einer ersten Ressource basierend auf einem ersten Parameter n umfasst:

Bestimmen, durch das Übertragungsende, der ersten Ressource basierend auf n und einer Randomisierungsfunktion; oder
Bestimmen, durch das Übertragungsende, der ersten Ressource basierend auf n und einer vordefinierten Regel; oder Bestimmen, durch das Übertragungsende, der ersten Ressource basierend auf n, einer Randomisierungsfunktion und einer vordefinierten Regel.

**6.** Verfahren nach einem der Ansprüche 1 bis 5, wobei das Verfahren ferner umfasst:
Bestimmen, durch das Übertragungsende, eines Redundanzversionssatzes der ersten Daten basierend auf K, wobei eine Menge M von Redundanzversionen, die in dem Redundanzversionssatz enthalten sind, kleiner oder gleich K ist und M eine positive ganze Zahl ist.

**7.** Verfahren nach einem der Ansprüche 1 bis 6, wobei eine beliebige Redundanzversion der ersten Daten mindestens einer Übertragung des ersten Informationsblocks entspricht.

**8.** Datenempfangsverfahren, wobei das Verfahren umfasst:

Empfangen (S310), durch ein Empfangsende, von ersten Daten unter Verwendung einer ersten Ressource; und
Bestimmen (S320), durch das Empfangsende, eines ersten Parameters n basierend auf der ersten Ressource, wobei n eine Menge von Übertragungen eines ersten Informationsblocks darstellt, der erste Informationsblock durch Verarbeiten der ersten Daten erhalten wird und n größer als 0 ist, wobei die erste Ressource in K vorkonfigurierten Ressourcen enthalten ist und K eine ganze Zahl größer oder gleich 1 ist;
**dadurch gekennzeichnet, dass** das Bestimmen (S320), durch das Empfangsende, eines ersten Parameters n basierend auf der ersten Ressource umfasst:
Bestimmen, durch das Empfangsende, von n basierend auf der ersten Ressource und einem zweiten Parameter j, wobei j verwendet wird, um ein Übertragungsende zu identifizieren, das die ersten Daten sendet.

**9.** Verfahren nach Anspruch 8, wobei die K vorkonfigurierten Ressourcen unterschiedliche Ressourcenstartpositionen aufweisen.

**10.** Verfahren nach Anspruch 8 oder 9, wobei die Menge von Übertragungen des ersten Informationsblocks in einer Eins-zu-Eins-Entsprechung mit mindestens einer der K Ressourcen steht.

**11.** Verfahren nach einem der Ansprüche 8 bis 10, wobei das Bestimmen (S320), durch das Empfangsende, eines ersten Parameters n basierend auf der ersten Ressource umfasst:

Bestimmen, durch das Empfangsende, von n basierend auf der ersten Ressource, dem zweiten Parameter j und mindestens einem von einer Referenzposition und einer ersten Zeiteinheit $t_1$, wobei die Referenzposition verwendet wird, um eine Ressource anzuzeigen, die bei der ersten Übertragung des ersten Informationsblocks verwendet wird, die erste Zeiteinheit $t_1$ eine Zeiteinheit ist, die von dem Übertragungsende zum Senden der ersten Daten verwendet wird.

**12.** Verfahren nach einem der Ansprüche 8 bis 11, wobei das Verfahren ferner umfasst:

Bestimmen, durch das Empfangssende, eines Redundanzversionssatzes der ersten Daten basierend auf K, wobei eine Menge M von Redundanzversionen, die in dem Redundanzversionssatz enthalten sind, kleiner oder gleich K ist und M eine positive ganze Zahl ist.

13. Verfahren nach einem der Ansprüche 8 bis 12, wobei eine beliebige Redundanzversion der ersten Daten mindestens einer Übertragung des ersten Informationsblocks entspricht.

14. Datensendevorrichtung, wobei die Vorrichtung eine Verarbeitungseinheit (402) und eine Kommunikationseinheit (403) umfasst, wobei
die Verarbeitungseinheit (402) dazu konfiguriert ist, eine erste Ressource basierend auf einem ersten Parameter n zu bestimmen, wobei n eine Menge von Übertragungen eines ersten Informationsblocks darstellt, die erste Ressource für eine aktuelle Übertragung des ersten Informationsblocks verwendet wird und n größer als 0 ist; und
die Kommunikationseinheit (403) dazu konfiguriert ist, erste Daten unter Verwendung der ersten Ressource, die durch die Verarbeitungseinheit bestimmt wird, zu übertragen, wobei die ersten Daten Daten sind, die durch Verarbeiten des ersten Informationsblocks erhalten werden und die für die aktuelle Übertragung verwendet werden, wobei die erste Ressource in K vorkonfigurierten Ressourcen enthalten ist und K eine ganze Zahl größer oder gleich 1 ist; **dadurch gekennzeichnet, dass**:
die Verarbeitungseinheit (402) konkret dazu konfiguriert ist, die erste Ressource basierend auf n und einem zweiten Parameter j zu bestimmen, wobei j verwendet wird, um die Datensendevorrichtung zu identifizieren.

15. Datenempfangsvorrichtung, wobei die Vorrichtung eine Verarbeitungseinheit (602) und eine Kommunikationseinheit (603) umfasst, wobei
die Kommunikationseinheit (603) dazu konfiguriert ist, erste Daten unter Verwendung einer ersten Ressource zu empfangen; und
die Verarbeitungseinheit (602) dazu konfiguriert ist, einen ersten Parameter n basierend auf der ersten Ressource zu bestimmen, die von der Kommunikationseinheit zum Empfangen der ersten Daten verwendet wird, wobei n eine Menge von Übertragungen eines ersten Informationsblocks darstellt, der erste Informationsblock durch Verarbeiten der ersten Daten erhalten wird und n größer als 0 ist, wobei die erste Ressource in K vorkonfigurierten Ressourcen enthalten ist und K eine ganze Zahl größer oder gleich 1 ist; **dadurch gekennzeichnet, dass** die Verarbeitungseinheit (602) dazu konfiguriert ist, n basierend auf der ersten Ressource und einem zweiten Parameter j zu bestimmen, wobei j verwendet wird, um ein Übertragungsende zu identifizieren, das die ersten Daten sendet.

## Revendications

1. Procédé d'envoi de données, dans lequel le procédé comprend :

la détermination (S210), par une extrémité de transmission, d'une première ressource sur la base d'un premier paramètre n, dans lequel n représente une quantité de transmissions d'un premier bloc d'informations, la première ressource est utilisée pour une transmission en cours du premier bloc d'informations, et n est supérieur à 0 ; et
la transmission (S220), par l'extrémité de transmission, de premières données à l'aide de la première ressource, dans lequel les premières données sont des données qui sont obtenues par traitement du premier bloc d'informations et qui sont utilisées pour la transmission en cours, dans lequel
la première ressource est constituée de K ressources préconfigurées, et K est un entier supérieur ou égal à 1 ;
**caractérisé en ce que** la détermination (S210), par une extrémité de transmission, d'une première ressource sur la base d'un premier paramètre n comprend :
la détermination, par l'extrémité de transmission, de la première ressource sur la base de n et d'un second paramètre j, dans lequel j est utilisé pour identifier l'extrémité de transmission.

2. Procédé selon la revendication 1, dans lequel les K ressources préconfigurées ont des positions de départ de ressources différentes.

3. Procédé selon la revendication 1 ou 2, dans lequel la quantité de transmissions du premier bloc d'informations est en correspondance biunivoque avec au moins une des K ressources.

4. Procédé selon l'une quelconque des revendications 1 à 3, dans lequel la détermination (S210), par une extrémité de transmission, d'une première ressource sur la base d'un premier paramètre n comprend :

la détermination, par l'extrémité de transmission, de la première ressource sur la base de n, du second paramètre j et d'au moins une d'une position de référence et d'une première unité de temps $t_1$, dans lequel la position de référence est utilisée pour indiquer une ressource utilisée dans la première transmission du premier bloc d'informations, la première unité de temps $t_1$ est une unité de temps utilisée par l'extrémité de transmission pour transmettre les premières données.

5. Procédé selon l'une quelconque des revendications 1 à 4, dans lequel la détermination (S210), par une extrémité de transmission, d'une première ressource sur la base d'un premier paramètre n comprend :

la détermination, par l'extrémité de transmission, de la première ressource sur la base de n et d'une fonction de randomisation ; ou
la détermination, par l'extrémité de transmission, de la première ressource sur la base de n et d'une règle prédéfinie ; ou la détermination, par l'extrémité de transmission, de la première ressource sur la base de n, d'une fonction de randomisation et d'une règle prédéfinie.

6. Procédé selon l'une quelconque des revendications 1 à 5, dans lequel le procédé comprend en outre :
la détermination, par l'extrémité de transmission, d'un ensemble de versions de redondance des premières données sur la base de K, dans lequel une quantité M de versions de redondance comprise dans l'ensemble de versions de redondance est inférieure ou égale à K, et M est un entier positif.

7. Procédé selon l'une quelconque des revendications 1 à 6, dans lequel toute version de redondance des premières données correspond à au moins une transmission du premier bloc d'informations.

8. Procédé de réception de données, dans lequel le procédé comprend :

la réception (S310), par une extrémité de réception, de premières données à l'aide d'une première ressource ; et
la détermination (S320), par l'extrémité de réception, d'un premier paramètre n sur la base de la première ressource, dans lequel n représente une quantité de transmissions d'un premier bloc d'informations, le premier bloc d'informations est obtenu par traitement des premières données, et n est supérieur à 0, dans lequel la première ressource est constituée de K ressources préconfigurées, et K est un entier supérieur ou égal à 1 ; **caractérisé en ce que** la détermination (S320), par l'extrémité de réception, d'un premier paramètre n sur la base de la première ressource comprend :
la détermination, par l'extrémité de réception, de n sur la base de la première ressource et d'un second paramètre j, dans lequel et j est utilisé pour identifier une extrémité de transmission qui envoie les premières données.

9. Procédé selon la revendication 8, dans lequel les K ressources préconfigurées ont des positions de départ de ressources différentes.

10. Procédé selon la revendication 8 ou 9, dans lequel la quantité de transmissions du premier bloc d'informations est en correspondance biunivoque avec au moins une des K ressources.

11. Procédé selon l'une quelconque des revendications 8 à 10, dans lequel la détermination (S320), par l'extrémité de réception, d'un premier paramètre n sur la base de la première ressource comprend :

la détermination, par l'extrémité de réception, de n sur la base de la première ressource, du second paramètre j et d'au moins une d'une position de référence et d'une première unité de temps $t_1$, dans lequel la position de référence est utilisée pour indiquer une ressource utilisée dans la première transmission du premier bloc d'informations, la première unité de temps $t_1$ est une unité de temps utilisée par l'extrémité de transmission pour envoyer les premières données.

12. Procédé selon l'une quelconque des revendications 8 à 11, dans lequel le procédé comprend en outre :
la détermination, par l'extrémité de réception, d'un ensemble de versions de redondance des premières données sur la base de K, dans lequel une quantité M de versions de redondance comprise dans l'ensemble de versions de redondance est inférieure ou égale à K, et M est un entier positif.

13. Procédé selon l'une quelconque des revendications 8 à 12, dans lequel toute version de redondance des premières données correspond à au moins une transmission du premier bloc d'informations.

14. Appareil d'envoi de données, dans lequel l'appareil comprend une unité de traitement (402) et une unité de communication (403), dans lequel

l'unité de traitement (402) est configurée pour déterminer une première ressource sur la base d'un premier paramètre n, dans lequel n représente une quantité de transmissions d'un premier bloc d'informations, la première ressource est utilisée pour une transmission en cours du premier bloc d'informations, et n est supérieur à 0 ; et

l'unité de communication (403) est configurée pour transmettre des premières données à l'aide de la première ressource déterminée par l'unité de traitement, dans lequel les premières données sont des données qui sont obtenues par traitement du premier bloc d'informations et qui sont utilisées pour la transmission en cours, dans lequel la première ressource est constituée de K ressources préconfigurées, et K est un entier supérieur ou égal à 1 ;

**caractérisé en ce que**

l'unité de traitement (402) est spécifiquement configurée pour déterminer la première ressource sur la base de n et d'un second paramètre j, dans lequel j est utilisé pour identifier l'appareil d'envoi de données.

15. Appareil de réception de données, dans lequel l'appareil comprend une unité de traitement (602) et une unité de communication (603), dans lequel

l'unité de communication est (603) configurée pour recevoir des premières données à l'aide d'une première ressource ; et

l'unité de traitement (602) est configurée pour déterminer un premier paramètre n sur la base de la première ressource utilisée par l'unité de communication pour recevoir les premières données, dans lequel n représente une quantité de transmissions d'un premier bloc d'informations, le premier bloc d'informations est obtenu par traitement des premières données, et n est supérieur à 0, dans lequel

la première ressource est constituée de K ressources préconfigurées, et K est un entier supérieur ou égal à 1 ;

**caractérisé en ce que** l'unité de traitement (602) est configurée pour déterminer n sur la base de la première ressource et d'un second paramètre j, dans lequel j est utilisé pour identifier une extrémité de transmission qui envoie les premières données.

Network device 110　　　　　　　Terminal device 120

FIG. 1

200

| A transmit end determines a first resource based on a first parameter n, where n represents a quantity of transmissions of a first information block, the first resource is used for a current transmission of the first information block, and n is greater than or equal to 0 | —— S210 |

| The transmit end transmits first data by using the first resource, where the first data is data that is obtained by processing the first information block and that is used for the current transmission | —— S220 |

FIG. 2

300

| A receive end receives first data by using a first resource | —— S310 |

| The receive end determines a first parameter n based on the first resource, where n represents a quantity of transmissions of a first information block, the first information block is obtained by processing the first data, and n is greater than or equal to 0 | —— S320 |

FIG. 3

400

Transmit end

401

Storage unit

402

Processing unit

403

Communications unit

FIG. 4

500

Transmit end

503

Transceiver

502

Processor

501

Memory

FIG. 5

600

Receive end

| Storage unit | 601 |

Processing unit | 602

Communications unit | 603

FIG. 6

700

Receive end

703

Transceiver

702

Processor

701

Memory

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016019552 A1
- US 2015271818 A1
- WO 2015154524 A1